(19) Europäisches Patentamt
European Patent Office
Office européen des brevets

(11) **EP 1 982 598 A1**

(12) **EUROPEAN PATENT APPLICATION**

(43) Date of publication:
**22.10.2008 Bulletin 2008/43**

(51) Int Cl.:
*A21D 13/00* (2006.01)  *A23L 1/307* (2006.01)
*A21D 13/06* (2006.01)  *A23K 1/165* (2006.01)
*A23L 1/03* (2006.01)  *A23L 1/09* (2006.01)
*A23G 3/54* (2006.01)

(21) Application number: **07106604.7**

(22) Date of filing: **20.04.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Nestec S.A.**
**1800 Vevey (CH)**

(72) Inventors:
• **HANSEN, Carl Erik**
  **1066, EPALINGES (CH)**

• **NICOLAS, Pierre**
  **1806, SAINT LEGIER (CH)**
• **VALLES PAMIES, Baltasar**
  **1700, FRIBOURG (CH)**

(74) Representative: **Schuller, Cornelis**
  **Nestec S.A.**
  **Intellectual Property Department**
  **Avenue Nestlé 55**
  **1800 Vevey (CH)**

(54) **Moisture resistant wafer**

(57) The present invention relates to a moisture resistant or moisture tolerant wafer which retains its crispy texture when exposed to moisture.

EP 1 982 598 A1

**Description**

Field of the Invention

The present invention relates to a moisture resistant or moisture tolerant wafer which retains its crispy texture when exposed to moisture. In this invention "moisture resistant" and "moisture tolerant" mean the same thing and will be used interchangeably.

Background of the Invention

Manufacturing wafers consists in preparing a batter containing mainly flour and water to which other minor ingredients may be added. Typically 40 to 50 % flour in batter is used in the manufacture of commercial flat wafers. Common formulations may also comprise at least one of the following ingredients: fat and/or oil, lecithin and/or emulsifiers, sugar, whole egg, salt, sodium bicarbonate, ammonium bicarbonate, skim milk powder, soy flour, yeast, and/or enzymes such as xylanases or proteases, for example. In the wafer manufacture, after preparation the batter is usually cooked between two heated engraved metal plates for a determined time at a certain temperature, for instance 2 min at 160°C, to produce large flat wafer sheets with a low moisture level. After cooling, the wafers are processed according to the requirements of the final product.

Wafers are baked products which are made from wafer batter and have crisp, brittle and fragile consistency. They are thin, with an overall thickness usually between < 1 and 4 mm and typical product densities range from 0.1 to 0.3 g/cm3. The surfaces are precisely formed, following the surface shape of the plates between which they were baked. They often carry a pattern on one surface or on both.

Two basic types of wafer are described by K.F. Tiefenbacher in "Encyclopaedia of Food Science, Food Technology and Nutrition p 417-420 - Academic Press Ltd London - 1993":

> 1) No- or low-sugar wafers. The finished biscuits contain from zero to a low percentage of sucrose or other sugars. Typical products are flat and hollow wafer sheets, moulded cones or fancy shapes.
> 2) High-sugar wafers. More than 10% of sucrose or other sugars are responsible for the plasticity of the freshly baked sheets. They can be formed into different shapes before sugar recrystallization occurs. Typical products are moulded and rolled sugar cones, rolled wafer sticks and deep-formed fancy shapes.

The present invention is concerned with wafers substantially of type (1), i.e. no-or low sugar wafers, and will be described in more detail below.

No-or low sugar wafers have a different texture and taste compared to high sugar wafers. When layered with a filling, they are used as the centre of well known chocolate confectionery products such as KIT KAT®.

Wafers may be distinguished from other biscuits/cookies in that wafers are the result of baking a batter whereas biscuits/cookies are usually baked out of a dough. Batter is a liquid suspension that will flow through a pipe whereas biscuit dough is rather stiff to permit rolling and flattening and normally has a water content of less than 50 parts per 100 parts of flour.

Wafers may also be produced by extrusion, according to our European copending patent application No. 06018976.8.

Wafer manufacture may use enzymes, preferably endo-proteinases (such as neutral bacterial proteinase from Bacillus subtilis or papain from Carica papaya), to hydrolyse the peptide bonds in wheat gluten, having the effect to prevent gluten lumps formation, and also xylanase (pentosanase) to hydrolyse the xylan backbone in arabinoxylan (pentosan), having the effect to decrease water binding capacity of wheat pentosans, to redistribute water among other flour components and to reduce batter viscosity. Combinations of these enzymes may also be used, mainly to decrease batter viscosity, make batters more homogenous, increase machinability, allow standard flour grades to be employed and/or increase the flour level in batter. These preparations have become widely accepted (Food Marketing & Technology, April 1994, p. 14).

There are strong trends towards light and crispy "on the go" products and wafers combined with indulgent fillings are highly appreciated by the consumer. One of the main attributes of wafers is its property of crispness when used in contact with components containing contrasting textures such as creams, jams or chocolate. However, a major disadvantage is that the level of crispness usually falls when wafers absorb moisture from some of the components or the external environment. It is well known that, if the water content of a cereal wafer increases beyond a certain level, the wafer suffers a dramatic deterioration in quality, losing crispness and becoming "cardboardy" and non-brittle. As a consequence, the wafers are perceived as soggy and the final food products are undesirable to consumers.

In known attempts to overcome this problem, the water activity of fillings used in wafer products has been lowered. One method of reducing the water activity has been disclosed in EP-A-372596 which involves the addition of ingredients such as sorbitol, glycerol or polyhydric alcohols. Another method of reducing the water activity has been disclosed in EP-A-515864 which involves the addition of hydrocolloids. Yet another common method of reducing the water activity is by the addition of fat. However, these methods often suffer from flavour, taste and texture problems. In addition, they do not provide low fat-low calorie products which are increasingly desired by consumers, particularly the trend for light and crispy "on the go" products.

Another known way to increase crispness retention is by coating the wafers with edible moisture barriers to prevent the water being transferred from the filling to the wafer. Chocolate or fatty materials may be used to provide such moisture resistant layers as described, for example, in EP-A-1080643. However, these additional treatments require wafer coating by dipping, spraying, enrobing or similar methods, which seriously complicate the industrial manufacture of confectionery products. In addition, the use of chocolate or fatty materials increases the calorie content.

WO 02/39820 seeks to provide baked food products with an increased crispiness at high moisture content by the use of sweeteners such as crystalline hydrate forming sugars (such as maltose, isomaltose, trehalose, lactose and raffinose) or high molecular weight starch hydrolysates. This approach is not suitable for no- or low sugar wafers which don't contain the required high levels of sweeteners.

This approach requires the use of costly ingredients (compared to flour) and has an important limitation in that the performance of high molecular weight starch hydrolysates is degraded during the batter holding time as they are progressively hydrolysed by endogenous flour enzymes. This has the effect of creating a final batter with a low Dextrose Equivalent (DE) which increases the stickiness of the wafers during baking. Sticky wafers have a detrimental effect on production throughput and so require the use of higher fat levels.

EP-A-1415539 discloses a flour based food product such as a wafer produced by using a thermostable alpha-amylase to manipulate textural properties of wafers. No mention is made of moisture tolerance.

Journal of Cereal Science 43 (2006), page 349 discloses that alpha-amylase was sprayed on the surface of bread dough prior to baking to elucidate the effect of starch hydrolysis on crust crispness. However, although the alpha-amylase treatment resulted in initially crispy fresh bread, the crispness disappeared within 2 hours storage.

Summary of the Present Invention

The present invention seeks to overcome the above disadvantages by providing moisture resistance to the wafer itself and we have surprisingly found that a no- or low sugar moisture resistant wafer which maintains its crispness in high water activity environments may be prepared by using a thermostable alpha-amylase in the batter.

The crispness of wafers may be evaluated by a penetration test (also known as a puncture test or crush test) which is performed by using a texture analyser able to record force/distance parameters during penetration of a probe into the wafer. The instrument forces a cylindrical probe into a stack of five wafers and the structural ruptures (force drops) are recorded over a certain distance. The frequency of force drops allows discrimination between wafer textures whereby the higher the number of force drops, the higher the crispness.The conditions used for this test were: Texture Analyser TA.HD, Stable Micro Systems, England; load cell 50 kg; 4mm diameter cylinder stainless probe; penetration rate 1mm/s; distance 8mm; record of force drops greater than 0.2N; trigger force greater than 0.5N; acquisition rate 500 points per second. Van Hecke E. (1991), "Contribution a l'étude des propriétés texturals des produits alimentaires alvéolés. Mise au point de nouveaux capteurs. Ph.D. Thesis, Université de Technologie de Compiègne", proposed a method based on 4 parameters to characterise force-deformation curve. Changes in moisture tolerance may be associated to one of these parameters (crispiness work, We) which is defined as

Crispness Work, We (N.mm). N.mm (Newton millimetre) is the non-SI work unit used.

$$Wc(N.mm) = \frac{(A/d)}{(No/d)}$$

where No; total number of peaks
d; distance of penetration (mm)
A; Area under the force-deformation curve (N.mm)

The above equation could be simplified to We = A/No.

[0021] A standard wafer tends to lose its perceived crispness progressively as the water activity is raised above 0.3.

This loss of crispness is a continuum (continuous changes upon hydration) with many factors having an influence such as the recipe, density, geometry, etc. Using the above penetration test, we have shown that the Wc of standard wafers starts to increase as the water activity is raised from 0.1 to 0.25.

Once the water activity of a standard wafer is increased above about 0.3, an increase in water activity of 0.1 results in an increase in the Wc of the said standard wafer greater than 1.5.

Detailed Description of the Invention

A moisture resistant wafer is defined in the present invention as a wafer that maintains crispness in high water activity environments, i.e. it maintains its mechanical resistance and its initial sensory attributes when equilibrated at elevated water activity levels such that at water activities from 0.3 to 0.4, surprisingly from 0.4 to 0.5, and more surprisingly from 0.5 to 0.6 an increase of 0.1 in water activity results in a Wc increase less than 1.5.

Accordingly, the present invention provides a no- or low sugar moisture resistant wafer, characterised in that at water activities from 0.3 to 0.6, an increase of 0.1 in water activity results in a We increase less than 1.5, preferably less than 1.25, and more preferably less than 1.0.

In the present invention, no- or low sugar wafers are defined as wafers containing from 0 to 15% by weight sweetener, preferably from 0 to 10% by weight sweetener, more preferably from 0 to 8% by weight sweetener, and even more preferably from 0 to 5% sweetener based on the weight of the wafer. The sweetener may be sucrose or another sugar or a starch hydrolysate of any Dextrose Equivalents (DE) or an inulin hydrolysate or mixtures of two or more of these sweeteners. Examples of sugars other than sucrose are, for example, glucose, lactose, maltose or fructose and crystalline hydrate formers such as isomaltose, trehalose, or raffinose.

The wafer may also contain added enzymes such as proteinases and/or xylanases.

The wafer may be a flat wafer either having geometric shapes or cartoons character shapes, as well as alphabet letters or numbers, for example. It can also be a three dimensional shaped wafer such as, for example, a cone, a glass, a dish. Wafer texture results from the generation of gas cells in a gel structure mainly composed of gelatinised starch. The high temperature of the baking plates induces a rapid gelatinisation of starch granules present in the flour and production and expansion of the gas bubbles inside the gelatinous matrix. These gas cells are, in the common practice, mainly generated from gassing agents such as added bicarbonates or carbon dioxide produced by gas-generating microorganisms such as yeast during batter fermentation and from steam produced by heating.

Therefore the wafer can be seen as a solid foam of gelatinised and dried starch/flour with dispersed gas cells (which can form an almost continuous phase in certain cases).

One method of preparing a wafer of the present invention involves the enzymatic depolymerisation of the starch present in the flour by a thermostable alpha-amylase leading to a reduction of the molecular weight of the starch and a reduction in the starch viscosity at the baking step. Although not wishing to be bound by theory, it is thought that a viscosity drop allows gas bubbles to grow further, due to the lower viscosity of the gelatinised starch phase. The moisture-resistant wafer may be prepared by a process comprising the steps of making a batter by mixing at least flour, water and a thermostable alpha -amylase and baking it on at least one hot surface.

A batter usually comprises around 40-50% flour, for example wheat flour, which itself contains approximately 70% of starch mainly occurring in the form of granules. In some batters, starch may be added in addition to the flour. Non-damaged starch cannot be modified by amylolytic enzymes before gelatinisation, a process involving dissolution of starch molecules from the starch granules by heating.

Amylolytic enzymes can only attack starch efficiently if starch granules have entered a gelatinisation process which occurs at temperatures above about 50-60°C. In the present invention, enzymatic hydrolysis starts with starch gelatinisation between the hot baking plates using a thermostable alpha-amylase.

The alpha-amylase is preferably added to the batter at the same time as the other ingredients, and is allowed to hydrolyse starch in the oven at a temperature around 100°C during the period of time corresponding to water evaporation. The enzyme is then progressively inactivated at the higher temperatures reached in the drying phase. The alpha-amylase can also be added to the batter just before the baking stage since the enzyme will hydrolyse gelatinised starch only in the oven.

Different alpha-amylases covering a broad range of thermostability are available on the market, such as fungal alpha-amylases having a low thermostability (55°C-60°C), cereal alpha-amylases having a medium thermostability (60°C-70°C), and bacterial alpha-amylases having a high thermostability of up to 100°C. The enzyme used is preferably of bacterial origin, is mostly active at a pH of 5 to 7 and at a temperature of about 70°C to 105°C. For example, the enzyme can be produced from Bacillus species or any other microorganism, plant or animal, having an alpha-amylase activity.

Suitable alpha-amylase enzymes that may be used are *Validase* HT 340L produced by the fermentation of Bacillus subtilis having an optimum temperature of activity of 90°C-95°C and an effective temperature of activity of up to 100°C, and *Validase* BAA produced by the fermentation of Bacillus subtilis having an optimum temperature of activity of 65°C-75°C and an effective temperature of activity of up to 90°C, both enzymes from Valley Research.

Therefore, the moisture-resistant wafer of the present invention preferably comprises a thermostable alpha -amylase and in-situ modified starch.

The amount of thermostable alpha -amylase incorporated into the batter may be from 0.0005% to 1.0%, preferably from 0.001% to 0.5% and more preferably from 0.01% to 0.25% by weight based on the total weight of the batter.

The wafer of the present invention may, if desired, also contain a fat or oil commonly used in baked confectionery, conveniently in an amount less than 4.0%, and preferably less than 2.0% by weight based on the total weight of the wafer.

The wafers of the present invention maintain desired textural qualities such as crispness at high moisture contents and therefore exhibit an increased moisture tolerance, particularly at a water activity at 0.30 or above.

The wafer obtained can be presented to the consumer as a wafer by itself, but it can also be further processed to form a confectionery or savoury food product or a petfood where the wafer contacts another food material. Therefore, the present invention also comprises a food product comprising a moisture-resistant wafer in contact with another food material, characterised in that at water activities from 0.3 to 0.6, an increase of 0.1 in water activity results in a Wc increase less than 1.5, preferably less than 1.25, and more preferably less than 1.0. The other food material may be a confectionery or savoury food product or a petfood.

Preferably the wafer is in direct contact with the food material. Conventional food materials may be used and examples of suitable food materials are chocolate, jelly, compound chocolate, ice-cream, sorbet, nut paste, cream-based products, cake, mousse, nougat, caramel, praline, jam, wafer rework or a combination of these ingredients with or without inclusions of the same ingredient in a different state or of a different ingredient. For savoury products suitable food materials would include fish or meat paste, cheese-based materials or vegetable puree. Such a food product may include one or more of these other materials as fillings for the wafer. The food material may contain a high water activity. In the present invention, for a food material with a filling, after equilibration between the filling and the wafer an acceptable sensory perception may be achieved for a water activity of up to 0.65. However, the filling may have previously had a higher water activity value since it will lose moisture during the equilibration phase. For example, it is possible to make a sandwich bar composed of external layers of wafers framing the same or different fillings. The sandwich can also be a succession of a wafer and filling pair, the first and last layers being wafer, comprising from 2 to 15 wafer layers. Although the use of a moisture barrier is generally unnecessary, a moisture barrier may optionally be used if desired.

It is also possible to use the wafer as the centre or part of the centre of a confectionery or savoury product or a petfood. The wafer may be enrobed or moulded in the coating material which can be any of the usual coatings, for example a chocolate, compound, icing, caramel or combinations of these. Preferably the food product is a confectionery product.

Preferably, the maximum water activity of the food product at equilibrium is 0.65.

Since the wafers of the present invention maintain desired textural qualities such as crispness or brittleness at high water activities, the invention allows the production of novel confectionery wafer products with healthier fillings such as low-fat or low-calorie fillings, or new fillings such as caramel, fruit jam or a real fruit filling, where the wafer is in direct contact with the filling without the need of a moisture barrier.

EXAMPLES

The following Examples further illustrate the present invention.

Example 1: Mechanical Assessment of Moisture Tolerance of Wafer

A batter was prepared having the following formulation:

| | |
|---|---|
| Flour | 100.0 parts |

(continued)

| | |
|---|---|
| Water | 160.0 parts |
| Sucrose | 2.0 parts |
| Fat | 1.0 parts |
| Lecithin | 0.2 parts |
| Sodium bicarbonate | 0.2 parts |

Two fractions of the batter were prepared. 0.1 part of a commercial alpha-amylase, Validase BAA from Valley Research containing 1,200,000 Modified Wohlgemuth Units (MVVU) per gram, was added to one of the fractions (treated fraction). The other fraction, without addition of alpha-amylase, was used as reference (standard fraction).

Wafers were prepared to provide two types of wafers: one series of reference wafers without enzyme (standard) and one series of wafers treated with the alpha-amylase (treated). Wafers were prepared by baking the batters for 2 minutes in an oven (25-plate wafer oven, Hebenstreit Moerfelded, West Germany) between two metal plates heated to 130°C. After short cooling, samples were hydrated in climatic chambers at the desired water activity (Aw) for 15 days before mechanical testing. The Aw was measured in each sample after hydration to verify the correct hydration of the sample.

In order to assess the moisture tolerance of the wafers, a texture analyser able to record force/distance parameters during penetration of a probe into the wafer was used. The instrument forces a cylindrical probe into a stack of five wafers and the structural ruptures (force drops) are recorded. The frequency of force drops allows discrimination between wafer textures whereby the higher the number of force drops, the higher the crispiness.

The conditions used for this test were: Texture Analyser TA.HD, Stable Micro Systems, England; load cell 50 kg; 4mm diameter cylinder stainless probe; penetration rate 1mm/s; distance 8mm; record of force drops greater than 0.2N; trigger force greater than 0.5N; acquisition rate 500 points per second.

The mechanical properties of the different wafers were analysed using a method based on the following 4 parameters which were used to characterise force-deformation curve.

Crispness Work, Wc (N.mm)

No; total number of peaks

d; distance of penetration (mm)

A; Area under the force-deformation curve (N.mm)

Changes in moisture tolerance may be associated to one of these parameters (crispiness work, Wc) which is defined as

$$Wc(N.mm) = \frac{(A/d)}{(No/d)}$$

The equation may be simplified to Wc(N.mm) = A/No

The lower the value of We, the crisper the wafer. The lower the increase in We for a given increase in water activity, the greater the moisture tolerance.

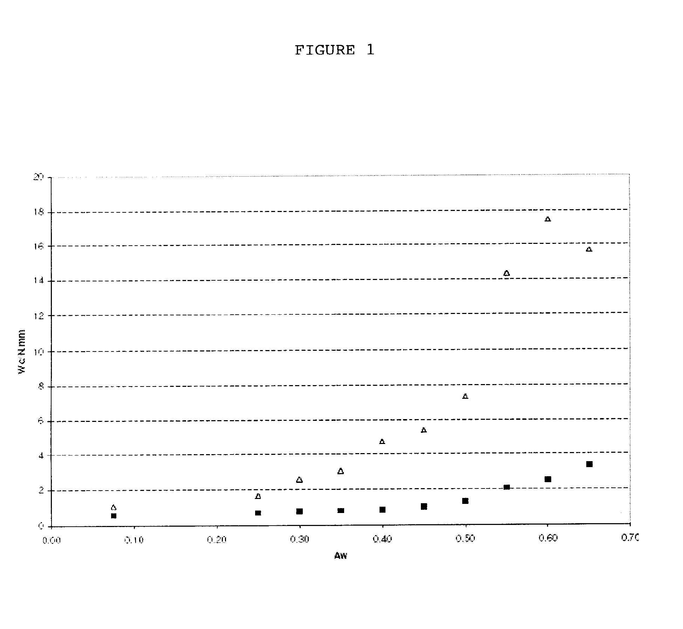

The wafer containing alpha-amylase (treated) shows improved moisture tolerance and crispness retention compared with the wafer not containing alpha-amylase (standard). This is illustrated in Figure 1 where it can be seen that at a water activity of 0.3 the value of We is lower for the wafer containing alpha-amylase (treated), and for each increase of water activity of 0.1 of the wafer from a minimum value of water activity of 0.3, the We modification of the wafer containing alpha-amylase (treated) is less than 1 whereas the We modification of the wafer not containing alpha-amylase (standard) is greater than 1.5.

Example 2: Sensory evaluation of wafers

A batter comprising 780 g of wheat flour, 730 g of water and minor ingredients was treated for 30 min at 35°C with a commercial enzyme blend containing protease and xylanase to obtain a suitable viscosity. 2 g of sodium bicarbonate were added to the mixture. Three fractions of batter were prepared. A commercial alpha-amylase, Validase BAA from Valley Research containing 1,200,000 Modified Wohlgemuth Units (MVVU) per gram and having an optimum temperature of activity of 65°C-75°C and an effective temperature of activity of up to 90°C was added to 2 fractions at a level of 0.25 and 0.5 g/kg batter respectively. The third fraction, without addition of alpha-amylase, was used as reference. Wafers were prepared by baking the batters 2 min in an oven (Hebenstreit ZQE Mini) between two metal plates heated to 160°C.

After short cooling, the wafers were either maintained in a sealed plastic bag (about 0.05 water activity) or equilibrated at 24°C in dessicators containing saturated salt solutions (water activities: 0.22, 0.33, 0.43 and 0.53).

Ten trained panellists took part in the sensory evaluation. During the training sessions, a glossary of 9 attributes with descriptive terms was generated. Panellists were trained on scales with references until they understood all attributes and scored the products consistently.

The wafers were equilibrated for three weeks at different water activity levels (Aw 0.11, 0.22, 0.33 and 0.43) and presented in small glass jars (5 discs of 3 cm diameter per jar). Samples, coded with three-digit random code numbers, were evaluated under red lighting.

All products were profiled in a continuous scale from 0 to 10. Data were collected in sensory booths using Fizz® sensory analysis software and two replications were performed.

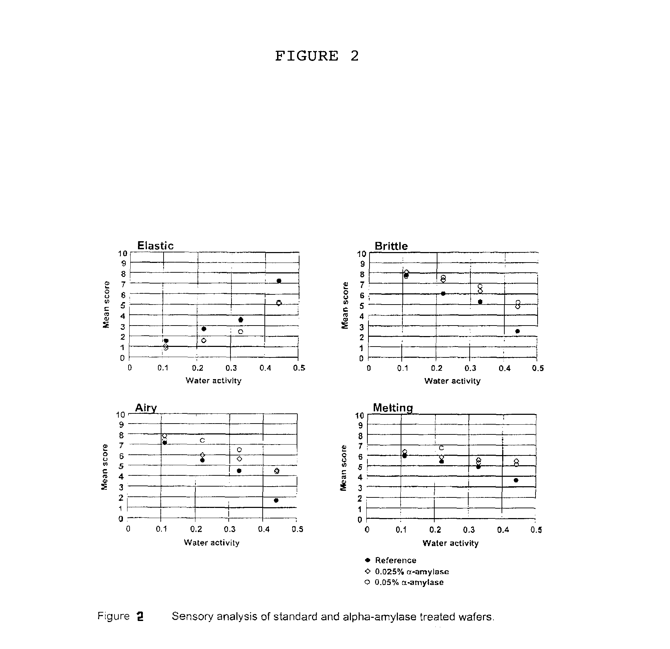

Main differences were perceived on the attributes elastic, brittle, airy and melting (Figure 2). At low water activity (Aw 0.11) no difference between treated and reference wafers was perceived. At increasing water activities, the alpha-amylase treated wafers were judged as less elastic and more brittle than the reference wafers. This indicated that alpha-amylase treatment improved crispness retention of wafers when hydrated. Wafers prepared with alpha-amylase were also found less sensitive to hydration with regard to airy and melting rate attributes.

Attributes were defined as follows:

| | |
|---|---|
| Elastic: | Elasticity perceived when the wafer is pressed between the molar teeth without breaking it. |
| Brittle: | Amount of particles formed while the wafer is crunched with the molar teeth. Assessed over the first crunch. |
| Airy: | Aeration of the wafer when the wafer is chewed with the molar teeth. Assessed over the first three chews. |
| Melting rate: | Melting of the wafer when pressed between the tongue and the palate. Assessed over the first three chews. |

Example 3: Sensory evaluation of mixes (wafer-caramel cream)

Wafers were prepared according to the method described in Example 2 to provide two types of wafers: 1 series of reference wafers without enzyme and 1 series of wafers treated with alpha-amylase (0.5 g/kg batter).

The wafers were cut into 3 cm diameter pieces (mean weight: 0.4 g) and allowed to equilibrate up to a constant weight for 3 weeks at 24°C in a closed dessicator containing a saturated solution of magnesium chloride (relative humidity: 32.8 %). Caramel cream (2.4 g; water activity 0.533) was layered between 2 wafer pieces and the resulting sandwiches were placed in small individual airtight jars. The jars were allowed to stand at 24°C for 3 weeks in order to allow water to migrate from the cream to the wafers up to equilibrium (0.49 water activity).

Descriptive sensory data on texture were collected from a group of 6 of the trained panellists of Example 2. All assessors found a very significant difference between reference and alpha-amylase treated samples. These alpha-amylase treated samples were judged more crispy, brittle and less elastic than samples prepared without alpha-amylase. These products were considered by assessors as presenting a markedly more pleasant texture than that of the reference

**Claims**

1. A no- or low sugar moisture resistant wafer, **characterised in that** at water activities from 0.3 to 0.6, an increase of 0.1 in water activity results in a We increase less than 1.5.

**2.** A moisture-resistant wafer according to claim 1 also comprising added proteinases and/or xylanases.

**3.** A moisture resistant wafer according to claim 2 wherein the wafer is a flat wafer or a three dimension shaped wafer.

**4.** A moisture-resistant wafer according to claim 1 wherein the wafer contains from 0 to 8% by weight of sweetener based on the weight of the wafer.

**5.** A moisture-resistant wafer according to claim 1 wherein the wafer contains from 0 to 5% by weight of sweetener based on the weight of the wafer.

**6.** A moisture-resistant wafer according to any one of claims 1 to 5 which comprises a thermostable alpha -amylase and in-situ modified starch.

**7.** A moisture-resistant wafer according to claim 6 wherein the amount of thermostable alpha -amylase incorporated into the batter may be from 0.0005% to 1.0% by weight based on the total weight of the batter

**8.** A moisture-resistant wafer according to claim 6 or claim 7 wherein the alpha - amylase is of bacterial, fungal, animal, or plants origin.

**9.** A moisture-resistant wafer according to claim 1 which contains no high molecular weight starch hydrolysate or a crystalline hydrate former.

**10.** A moisture-resistant wafer according to claim 1 wherein the wafer contains less than 4.0% by weight of edible fat or oil based on the weight of the wafer.

**11.** A moisture-resistant wafer according to claim 1 wherein the wafer contains less than 2.0% by weight of edible fat or oil based on the weight of the wafer.

**12.** Process for making a moisture-resistant wafer comprising the steps of making a batter by mixing at least flour, water and a thermostable alpha -amylase and baking it on at least one hot surface.

**13.** A food product comprising a no- or low sugar moisture-resistant wafer in contact with another food material, **characterised in that** at water activities from 0.3 to 0.6, an increase of 0.1 in water activity results in a Wc increase less than 1.5.

**14.** A food product according to claim 13 wherein the other food material is a confectionery, savoury or petfood material.

**15.** A food product according to claim 14 wherein the confectionery material is chocolate, jelly, compound chocolate, ice-cream, sorbet, nut paste, cream, cream-based products, cake, mousse, nougat, caramel, praline, jam, wafer rework or a combination of these ingredients with or without inclusions of the same ingredient in a different state or of a different ingredient.

**16.** A food product according to claim 14 wherein the savoury material is fish or meat paste, cheese-based materials or vegetable puree.

**17.** A food product according to any one of claims 13 to 16 wherein one or more of the other food materials is included as a filling for the wafer.

**18.** A food product according to claim 17 wherein the other food material is a confectionery material and is a low-fat or low-calorie filling, a fruit jam or a real fruit filling.

**19.** A food product according to any one of claims 13 to 16 wherein the wafer is the centre or part of the centre of a confectionery or savoury product or a petfood.

**20.** A food product according to any one of claims 13 to 19 wherein the wafer is in direct contact with the food material in the absence of a moisture barrier.

**21.** A food product according to any one of claims 13 to 19 wherein a moisture barrier is present between the wafer and the confectionery material.

**22.** A confectionery product according to any of claims 13 to 21 wherein the other food material has a high water activity.

**23.** A confectionery product according to any of claims 13 to 22 wherein the maximum water activity of the product at equilibrium is 0.65.

**24.** Use of a no- or low sugar wafer for exhibiting moisture resistance and maintaining crispiness **characterised in that** at water activities from 0.3 to 0.6, an increase of 0.1 in water activity results in a Wc increase less than 1.5.

FIGURE 1

FIGURE 2

Figure 2    Sensory analysis of standard and alpha-amylase treated wafers.

**European Patent**
**Office**

**PARTIAL EUROPEAN SEARCH REPORT**

**Application Number**

which under Rule 45 of the European Patent Convention
shall be considered, for the purposes of subsequent
proceedings, as the European search report

EP 07 10 6604

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X<br><br>Y | EP 1 415 539 A (NESTEC SA [CH])<br>6 May 2004 (2004-05-06)<br>* paragraphs [0019] - [0026]; claims<br>1-5,8-11,13; examples 1,2,4,5 *<br>----- | 1-23<br><br>24 | INV.<br>A21D13/00<br>A23L1/307<br>A21D13/06<br>A23K1/165 |
| X | DD 128 201 A1 (DRECHSEL WOLFGANG; TAEUFEL<br>ALFRED; RUTTLOFF HEINZ; SCHLOBACH CARL<br>RUDO) 2 November 1977 (1977-11-02)<br>* page 3, paragraph 2 - paragraph 4;<br>example 2 *<br>-----<br>-/-- | 1-12 | A23L1/03<br>A23L1/09<br>A23G3/54 |

| TECHNICAL FIELDS<br>SEARCHED (IPC) |
|---|
| A21D<br>A23L<br>A23K<br>A23G |

## INCOMPLETE SEARCH

The Search Division considers that the present application, or one or more of its claims, does/do
not comply with the EPC to such an extent that a meaningful search into the state of the art cannot
be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| The Hague | 11 October 2007 | Saettel, Damien |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C07)

European Patent Office

**PARTIAL EUROPEAN SEARCH REPORT**

Application Number

EP 07 10 6604

| Category | Citation of document with indication, where appropriate, of relevant passages | Relevant to claim | CLASSIFICATION OF THE APPLICATION (IPC) |
|---|---|---|---|
| X | TAEUFEL A ET AL: "Enzymeinsatz zur Rationalisierung der Wfeelproduktion I. Zum Einsaztz von Proteasen und Amylasen" BAECKER UND KONDITOR, FACHBUCHVERLAG, LEIPZIG, DE, vol. 32, no. 1, 1984, pages 22-24, XP002237629 ISSN: 0005-383X | 1-12 | |
| A | * page 22, left-hand column, paragraph 1; table 2 * <br> * page 24, right-hand column, paragraph 4 * <br> * page 23, right-hand column, paragraph 2 * <br> ----- | 13-24 | |
| Y | GB 1 240 557 A (CPC INTERNATIONAL INC [US]) 28 July 1971 (1971-07-28) | 24 | |
| A | * page 1, line 37 - page 2, line 44 * <br> * page 3, line 38 - line 53 * <br> ----- | 1-23 | |
| A | DE 14 32 077 A1 (WILHELM WOLFF & CO GMBH) 10 April 1969 (1969-04-10) <br> * the whole document * <br> ----- | 21 | |
| A | US 6 068 864 A (BARRETT MARK R [US] ET AL) 30 May 2000 (2000-05-30) <br> * column 2, line 25 - line 30 * <br> * column 5, line 26 - line 41 * <br> ----- | 1-24 | |
| A,D | "Encyclopaedia of Food Science, Food Technology and Nutrition" 1993, ACADEMIC PRESS , XP008065452 <br> * page 417, right-hand column * <br> ----- | 1-24 | |

TECHNICAL FIELDS SEARCHED (IPC)

**European Patent Office**

**INCOMPLETE SEARCH SHEET C**

Application Number

EP 07 10 6604

Claim(s) searched completely:
        12

Claim(s) searched incompletely:
        1-11, 13-24

Claim(s) not searched:
        -

Reason for the limitation of the search:

Present claims 1-11 and 13-24 relate to a product defined (inter alia) by reference to the following unusual parameter:

Wc (crispness work)

The use of this unusual parameter in the present context is considered to lead to a lack of clarity because the claims do not clearly identify the products encompassed by it as the parameter cannot be clearly and reliably determined by indications in the description or by objective procedures which are usual in the art. This makes it impossible to compare the claims to the prior art. As a result, the application does not comply with the requirement of clarity under Article 84 EPC.

The lack of clarity is to such an extent, that a meaningful search of the whole claimed subject-matter of claims 1-11 and 13-24 could not be carried out (Rule 45 EPC). The extent of the search was consequently limited to the examples clearly defined in, and supported and disclosed by the description, see p. 5, l. 2-6 and p. 7, l. 22 - p. 8, l. 2.

**ANNEX TO THE EUROPEAN SEARCH REPORT**
**ON EUROPEAN PATENT APPLICATION NO.**

EP 07 10 6604

This annex lists the patent family members relating to the patent documents cited in the above-mentioned European search report.
The members are as contained in the European Patent Office EDP file on
The European Patent Office is in no way liable for these particulars which are merely given for the purpose of information.

11-10-2007

| Patent document cited in search report | | Publication date | Patent family member(s) | | Publication date |
|---|---|---|---|---|---|
| EP 1415539 | A | 06-05-2004 | AU | 2003282059 A1 | 25-05-2004 |
| | | | BR | 0315938 A | 13-09-2005 |
| | | | CA | 2499445 A1 | 13-05-2004 |
| | | | CN | 1708229 A | 14-12-2005 |
| | | | WO | 2004039162 A1 | 13-05-2004 |
| | | | JP | 2006504421 T | 09-02-2006 |
| | | | MX | PA05003700 A | 14-12-2005 |
| | | | US | 2006057270 A1 | 16-03-2006 |
| | | | ZA | 200504315 A | 26-07-2006 |
| DD 128201 | A1 | 02-11-1977 | NONE | | |
| GB 1240557 | A | 28-07-1971 | BE | 736345 A | 22-01-1970 |
| | | | CA | 928136 A1 | 12-06-1973 |
| | | | CH | 560518 A5 | 15-04-1975 |
| | | | DE | 1937687 A1 | 18-06-1970 |
| | | | ES | 369804 A1 | 01-01-1972 |
| | | | FR | 2013613 A5 | 03-04-1970 |
| | | | JP | 48010217 B | 02-04-1973 |
| | | | NL | 6911187 A | 27-01-1970 |
| | | | SE | 361407 B | 05-11-1973 |
| DE 1432077 | A1 | 10-04-1969 | NONE | | |
| US 6068864 | A | 30-05-2000 | CA | 2209634 A1 | 12-01-1998 |
| | | | EP | 0818399 A1 | 14-01-1998 |
| | | | US | 6048558 A | 11-04-2000 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 06018976 A
- EP 372596 A
- EP 515864 A
- EP 1080643 A
- WO 0239820 A
- EP 1415539 A

**Non-patent literature cited in the description**

- **K.F. TIEFENBACHER.** *Encyclopaedia of Food Science, Food Technology and Nutrition,* 1993, 417-420
- *Food Marketing & Technology,* April 1994, 14
- *Journal of Cereal Science,* 2006, vol. 43, 349
- **VAN HECKE E.** Contribution a l'étude des propriétés texturals des produits alimentaires alvéolés. *Mise au point de nouveaux capteurs. Ph.D. Thesis,* 1991